# EUROPEAN PATENT APPLICATION

(11) **EP 2 375 757 A1**
(43) Date of publication of application: **12.10.2011**
(21) Application number: 11153941.7
(22) Date of filing: 10.02.2011
(51) Int. Cl.: H04N 13/00, H04N 7/26

(54) **Information processing apparatus, information processing method, reproduction apparatus, reproduction method, and program**

(30) Priority: 31.03.2010 JP 2010080520
(71) Applicant: Sony Corporation, Tokyo 108-0075 (JP)
(72) Inventor: Kato, Motoki, Tokyo 108-0075 (JP)
(74) Representative: Beder, Jens

(57) **Abstract**

An information processing apparatus that includes an interface that receives a multi-view video coded stream including a base view video stream and a dependent view video stream, and control information corresponding to at least one of a plurality of predetermined formats of the multi-view coded video stream. The information processing apparatus further includes a display control unit that controls reproduction of the base video stream and the dependent video stream based on the control information.

## Description

### BACKGROUND

### 1. Technical Field

The present disclosure relates to an information processing apparatus, an information processing method, a reproduction apparatus, a reproduction method, and a program. In particular, the present disclosure relates to an information processing apparatus, an information processing method, a reproduction apparatus, a reproduction method, and a program, which can realize plural kinds of functions using an encoding method that encodes video data with plural views.

### 2. Description of the Related Art

Recently, 3D content that contains an image in 3D (three dimensions) has been spotlighted. By seeing an image of 3D content, a viewer can stereoscopically recognize an object.

Plural methods for displaying an image in 3D have been proposed. For example, there is a method of stereoscopically recognizing an object by alternately displaying an image for the left eye (L image) and an image for the right eye (R image) with disparity and sending the L image and the R image to the left eye and the right eye of the viewer who wears active shutter glasses.

As one method for encoding the L image and the R image, there is the MVC (Multi-view Video Coding) standard that extends the MPEG4 AVC H.264 standard. In the MVC standard, a video stream that is called a base view video stream and a video stream that is called a dependent view video stream have been defined.

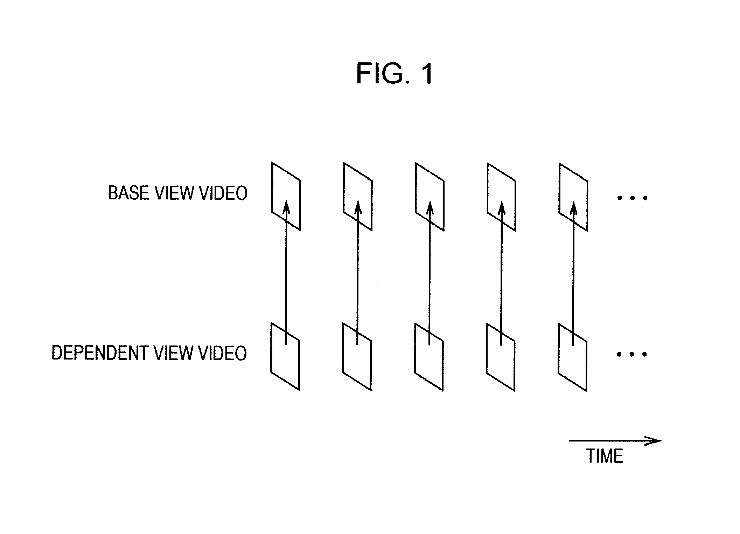

Fig. 1 is a diagram illustrating examples of the base view video stream and the dependent view video stream.

As indicated by arrows in Fig. 1, the base view video does not permit prediction encoding that considers a stream of another view as a reference image, but the dependent view video permits the prediction encoding that considers the base view video as the reference image.

For example, in the case of performing the encoding in consideration of the L image as the base view and the R image as the dependent view, the volume of data of the base view video stream and the dependent view video stream obtained as the result of encoding becomes smaller in comparison to the volume of data in the case of encoding the images in the H.264/AVC standard.

In this case, since the encoding is performed in the H.264/AVC standard, prediction in the temporal direction is performed in encoding the base view video stream. Also, with respect to the dependent view video stream, prediction in the temporal direction is performed together with prediction between the views. In order to decode the dependent view video, it is necessary to first end the decoding of the corresponding base view video which was the reference during the encoding.

Japanese Unexamined Patent Application Publication No. 2009-100070 is an example of related art.

### SUMMARY

In general, although the MVC standard is used to encode the video data with plural views, it is also considered to use the MVC standard for realization of other functions.

In view of the above situation, it is desirable to make it possible to realize plural kinds of functions using an encoding method that encodes video data with plural views.

According to a first embodiment, the disclosure is directed to an information processing apparatus, comprising: an interface configured to receive a multi-view video coded stream including a base view video stream and a dependent view video stream, and control information corresponding to at least one of a plurality of predetermined formats of the multi-view coded video stream; and a display control unit configured to control reproduction of the base video stream and the dependent video stream based on the control information.

The control information may indicate an application type corresponding to the multi-view video coded stream.

The control information may indicate that the multi-view video coded stream is a three-dimensional video signal.

The base view video stream may correspond to a left eye image and the dependent view video stream may correspond to a right eye image of a three-dimensional video signal.

The display control unit may be configured to control reproduction of the base view video stream and the dependent view video stream by alternating frames of each of the base view video stream and the dependent view video stream.

The control information may indicate that the multi-view video coded stream is a two view video signal.

The base view video stream may correspond to a first view and the dependent view video stream may correspond to a second view of a two view video signal.

The display control unit may be configured to control reproduction of the first view by reproducing only the base video view stream, and control reproduction of the second view by reproducing only the dependent view video stream.

The control information may indicate that the multi-view video coded stream is a high frame rate video signal.

The base view video stream may correspond to an odd numbered frame and the dependent view video stream may correspond to an even numbered frame of a high frame rate video signal.

The display control unit may be configured to control reproduction of the base view video stream and the dependent view video stream by alternating frames of each of the base view video stream and the dependent view video stream.

The control information may indicate that the multi-view video coded stream is a two-dimensional video signal.

Respective frames of each of the base view video stream and the dependent view video stream may correspond to the same image data of a two-dimensional video signal.

According to another embodiment, the disclosure is directed to an information processing method performed by an information processing apparatus, the method comprising: acquiring, at an interface of the information processing apparatus, a multi-view video coded stream including a base view video stream and a dependent view video stream, and control information corresponding to at least one of a plurality of predetermined formats of the multi-view coded video stream; and controlling, at a display control unit of the information processing apparatus, reproduction of the base video stream and the dependent video stream based on the control information.

According to another embodiment, the disclosure is directed to a non-transitory computer-readable medium including computer program code, which when executed by an information processing apparatus, causes the information processing apparatus to perform a method comprising: acquiring a multi-view video coded stream including a base view video stream and a dependent view video stream, and control information corresponding to at least one of a plurality of predetermined formats of the multi-view coded video stream; and controlling reproduction of the base video stream and the dependent video stream based on the control information.

According to another embodiment, the disclosure is directed to an information processing apparatus comprising: an interface configured to receive video stream data; an encoding unit configured to encode the received video stream data into a multi-view video coded stream including a base view video stream and a dependent view video stream based on predetermined format information; and an output unit configured to output the multi-view video coded stream and associated control information corresponding to the format information.

The information processing apparatus may further comprise a multiplexing unit configured to multiplex the multi-view video coded stream and the control information.

The predetermined format information and the control information may indicate an application type corresponding to the multi-view video coded stream.

The predetermined format information may indicate a three-dimensional format.

The encoding unit may be configured to encode the video stream data into a three-dimensional multi-view video coded stream including the base view video stream corresponding to a left eye image and the dependent view video stream corresponding to a right eye image.

The predetermined format information may indicate a two view video signal.

The encoding unit may be configured to encode the received video stream data into a two view multi-view video coded stream including the base view video stream corresponding to a first view and the dependent view video stream corresponding to a second view.

The predetermined format information may indicate a high frame rate video signal.

The encoding unit may be configured to encode the received video stream data into a high frame rate multi-view video coded stream including the base view video stream corresponding to odd numbered frames and the dependent view video stream corresponding to a second view.

The predetermined format information may indicate a two-dimensional video signal.

The encoding unit may be configured to encode the received video stream data into a two-dimensional multi-view video coded stream and respective frames of each of the base view video stream and the dependent view video stream correspond to the same image data.

According to another embodiment, the disclosure is directed to an information processing method performed by an information processing apparatus, the method comprising: receiving, at an interface of the information processing apparatus, video stream data; encoding, at an encoding unit of the information processing apparatus, the received video stream data into a multi-view video coded stream including a base view video stream and a dependent view video stream based on predetermined format information; and outputting, at an output unit of the information processing apparatus, the multi-view video coded stream and associated control information corresponding to the format information.

According to another embodiment, the disclosure is directed to a non-transitory computer-readable medium including computer program code, which when executed by an information processing apparatus, causes the information processing apparatus to perform a method comprising: receiving video stream data; encoding the received video stream data into a multi-view video coded stream including a base view video stream and a dependent view video stream based on predetermined format information; and outputting the multiplexed multi-view video coded stream and associated control information corresponding to the format information.

### BRIEF DESCRIPTION OF THE DRAWINGS

Fig. 1 is a diagram illustrating examples of a base view video stream and a dependent view video stream;
Fig. 2 is a diagram illustrating an information processing system according to an embodiment of the present invention;
Fig. 3 is a diagram illustrating a configuration example of an MVC stream;
Fig. 4 is a diagram illustrating examples of functions displayed by an MVC application type;
Fig. 5 is a diagram illustrating a 3D video application;
Fig. 6 is a diagram illustrating a two views application;
Fig. 7 is a diagram illustrating a high frame-rate application;
Fig. 8 is a diagram illustrating a 2D video application;
Fig. 9 is a block diagram illustrating a configuration example of an information processing apparatus;
Fig. 10 is a block diagram illustrating a configuration example of a reproduction apparatus;
Fig. 11 is a flowchart illustrating processes of an information processing apparatus;
Fig. 12 is a flowchart illustrating processes of a reproduction apparatus; and
Fig. 13 is a block diagram illustrating a configuration example of computer hardware.

### DESCRIPTION OF THE PREFERRED EMBODIMENTS

### [Configuration of an information processing system]

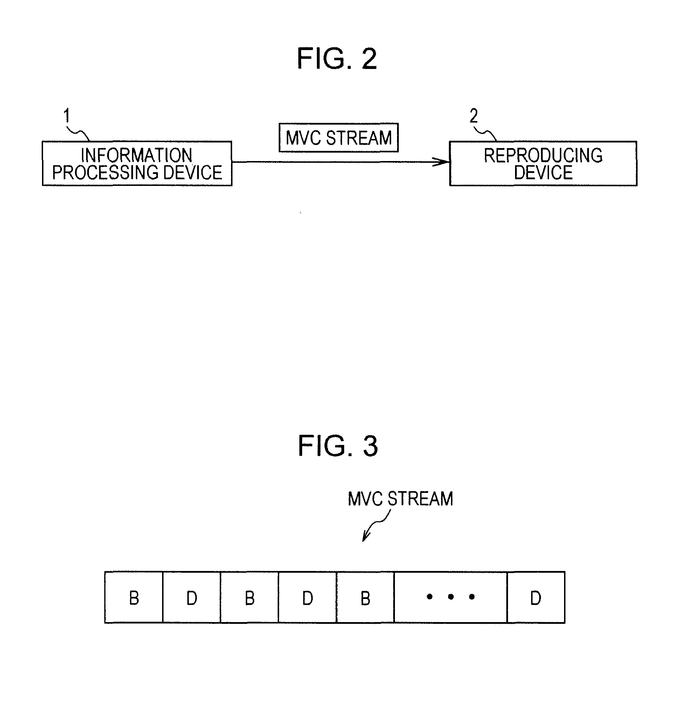

Fig. 2 is a diagram illustrating an information processing system according to an embodiment of the present invention.

The information processing system as illustrated in Fig. 2 includes an information processing apparatus 1 and a reproduction apparatus 2. A display such as an LCD (Liquid Crystal Display) for displaying an image output from the reproduction apparatus 2 is connected to the reproduction apparatus 2.

The information processing apparatus 1 encodes an input video stream according to the MVC standard, and generates an MVC stream. The MVC stream, as illustrated in Fig. 3, includes base view video stream data and dependent view video stream data.

In an example of Fig. 3, the entire base view video stream and the entire dependent view video stream are divided into predetermined sections, and the respective sections coexist in one stream. In Fig. 3, the section indicated by a character "B" is a section of the base view video stream, and the section indicated by a character "D" is a section of the dependent view video stream.

Also, the information processing apparatus 1 generates an MVC application type that is attribute information that indicates a function realized using data obtained by decoding the MVC stream. The information processing apparatus 1 outputs the generated MVC application type in correspondence to the MVC stream. The MVC application type may be defined by data of an MVC stream file and other files, or may be defined by a descriptor of a PMT (Program Map Table) that is TS (Transport Stream) transmission control information.

The MVC stream and the MVC application type generated by the information processing apparatus 1 are recorded in a recording medium such as a Blu-ray (trademark) disc or provided to the reproduction apparatus 2 through a broadcasting wave or a network.

The reproduction apparatus 2 acquires the MVC stream and the MVC application type output from the information processing apparatus 1. The reproduction apparatus 2 decodes the MVC stream, and performs a process for realizing a function indicated by the MVC application type using data obtained by the decoding. Specifically, the reproduction apparatus 2 switches the display type of an image obtained by decoding the base view video stream included in the MVC stream and an image obtained by decoding the dependent view video stream in accordance with the value of the MVC application type.

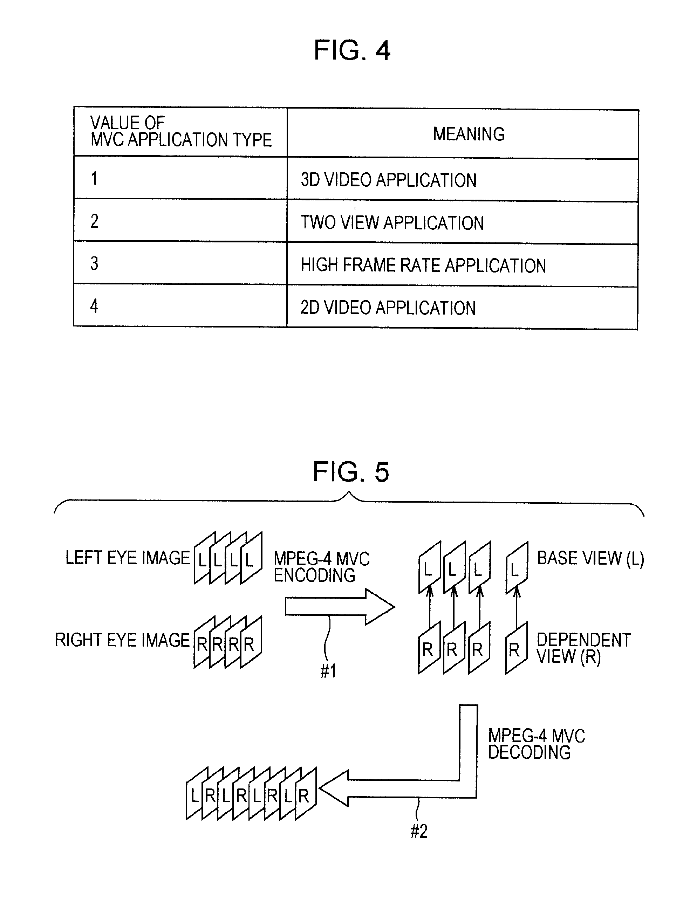

Fig. 4 is a diagram illustrating examples of functions (applications) indicated by the MVC application type.

As illustrated in Fig. 4, if the value of the MVC application type is "1", it indicates a 3D video application, and if the value of the MVC application type is "2", it indicates two views application. If the value of the MVC application type is "3", it indicates a high frame-rate application, and if the value of the MVC application type is "4", it indicates a 2D video application. The respective applications will be described.

### [3D video application]

Fig. 5 is a diagram illustrating a 3D video application.

The stereo 3D video application is a function of displaying a 3D image.

As illustrated in Fig. 5, as video streams to be encoded, a stream for an L image and a stream for an R image are input to the information processing apparatus 1. In the information processing apparatus 1, as indicated by the end of an arrow #1, for example, the stream for the L image, which corresponds to the base view, and the stream for the R image, which corresponds to the dependent view, are encoded according to the MVC standard. In encoding the R image, the L image is appropriately referred to.

The MVC stream, which includes the base view video stream obtained by encoding the stream for the L image and the dependent view video stream obtained by encoding the stream for the R image, is provided to the reproduction apparatus 2.

In the reproduction apparatus 2, the MVC stream is decoded, and as indicated by the end of an arrow #2, the L image obtained by decoding the base view video stream and the R image obtained by decoding the dependent view video stream are displayed alternately, i.e. in the so-called frame sequential method. Accordingly, a viewer who wears active shutter glasses can see the image reproduced by the reproduction apparatus 2 as the 3D image.

### [Two views application]

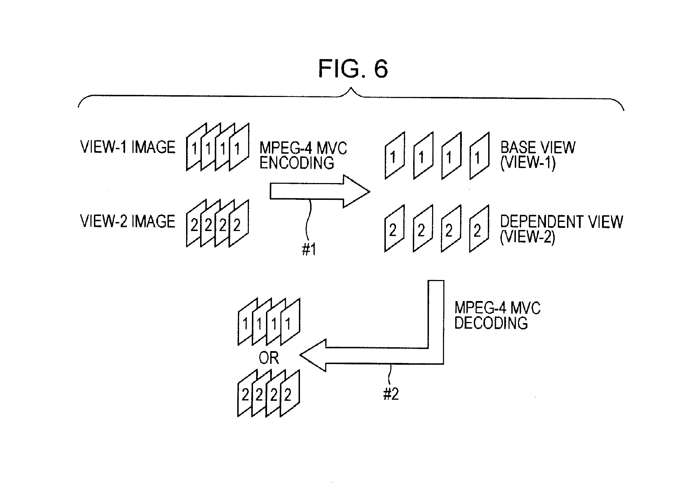

Fig. 6 is a diagram illustrating a two views application.

The two views application is a function of displaying any one of two images having different views.

As illustrated in Fig. 6, as video streams to be encoded, a stream for a view-1 image and a stream for a view-2 (which is different from view-1) image are input to the information processing apparatus 1. In the information processing apparatus 1, as indicated by the end of an arrow #1, for example, the stream for the view-1 image, which is the base view, and the stream for the view-2 image, which is the dependent view, are encoded according to the MVC standard. In encoding the view-2 image, the view-1 image is not referred to.

The MVC stream, which includes the base view video stream obtained by encoding the stream for the view-1 image and the dependent view video stream obtained by encoding the stream for the view-2 image, is provided to the reproduction apparatus 2. Since the dependent view video stream is encoded without referring to the view-1 image, it becomes a stream that is decodable as a single stream.

In the reproduction apparatus 2, the MVC stream is decoded, and as indicated by the end of an arrow #2, any one of the view-1 image obtained by decoding the base view video stream and the view-2 image obtained by decoding the dependent view video stream is displayed. The viewer who views the image (2D image) reproduced by the reproduction apparatus 2 can see the view-1 image or the view-2 image.

The switching of the views is performed, for example, in accordance with a viewer's instruction or an instruction of an author who is a producer of the content of the MVC stream. In the case where the switching of the views is performed in accordance with the instruction of the author of the MVC stream, information that indicates the instruction is included in reproduction control information that is referred to by the reproduction apparatus 1 when the MVC stream is reproduced.

### [High frame-rate application]

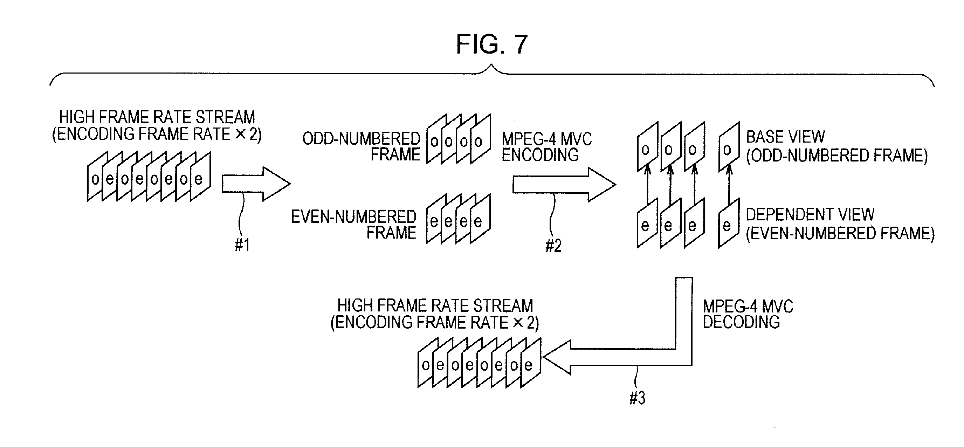

Fig. 7 is a diagram illustrating a high frame-rate application.

The high frame-rate application is a function of displaying an image with a frame rate that is twice the frame rate of the base view video stream and the dependent view video stream.

As illustrated in Fig. 7, as a video stream to be encoded, for example, a high frame-rate stream, which is a stream with a frame rate of 60Hz (60 frames/sec), is input to the information processing apparatus 1. Respective images included in the high frame-rate stream are images at the same view.

In the information processing apparatus 1, as indicated by the end of an arrow #1, respective images (frames) included in the high frame-rate stream are divided into odd-numbered frames and even-numbered frames in the order of display, starting from the forefront frame.

Also, as indicated by the end of an arrow #2, for example, a stream composed of the odd-numbered frames, which correspond to the base view, and a stream composed of the even-numbered frames, which correspond to the dependent view, are encoded according to the MVC standard. In encoding the even-numbered frames, the odd-numbered frames are appropriately referred to.

The MVC stream that includes the base view video stream obtained by encoding the stream composed of the odd-numbered frames and the dependent view video stream obtained by encoding the stream composed of the even-numbered frames is provided to the reproduction apparatus 2. The frame rate of the base view video stream and the dependent view video stream is 30Hz that is 1/2 of the frame rate of the high frame-rate stream.

In the reproduction apparatus 2, the MVC stream is decoded, and as indicated by the end of an arrow #3, the frame obtained by decoding the base view video stream and the frame obtained by decoding the dependent view video stream are alternately displayed as the odd-numbered frame and the even-numbered frame. The odd-numbered frame and the even-numbered frame are displayed with a frame rate that is twice the frame rate of the base view video stream and the dependent view video stream.

A viewer who views the image reproduced by the reproduction apparatus 2 can see the image of the high frame-rate stream that is input to the information processing apparatus 1 as the subject of encoding.

### [2D video application]

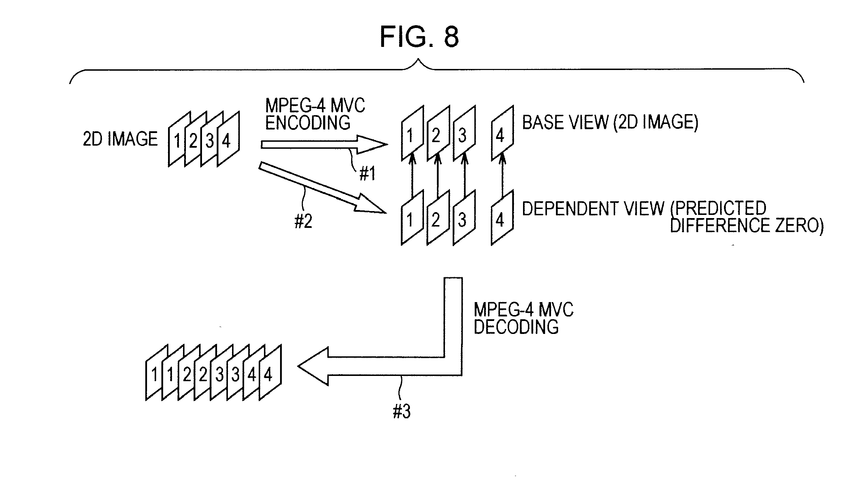

Fig. 8 is a diagram illustrating a 2D video application.

The 2D video application is a function of displaying a 2D image using the result of decoding both the base view video stream and the dependent view video stream.

As illustrated in Fig. 8, as a video stream to be encoded, a 2D image stream is input to the information processing apparatus 1. The respective images included in the 2D image stream are images at the same view.

In the information processing apparatus 1, a copy of the input 2D image stream is generated.

Also, the image of the original 2D image stream, which is the base view as indicated by the end of an arrow #1, and the image of the copy, which is the dependent view as indicated by the end of an arrow #2, are encoded according to the MVC standard. By referring to the original 2D image stream in encoding the copy, the difference value in interview prediction between each image of the dependent view and each image of the base view is encoded as zero.

The MVC stream that includes the base view video stream obtained by encoding the original 2D image stream and the dependent view video stream obtained by encoding the 2D image stream of the copy is provided to the reproduction apparatus 2.

In the reproduction apparatus 2, the MVC stream is decoded, and as indicated by the end of an arrow #3, the 2D image obtained by decoding the base view video stream and the copy of the 2D image obtained by decoding the dependent view video stream are alternately displayed. As the same image is displayed by two frames, the viewer who views the image can see the image in 2D even if the viewer does not wear the active shutter glasses.

For example, any one function among four functions as described above is designated by the MVC application type, and is realized in the reproduction apparatus 2.

### [Configuration example of respective apparatuses]

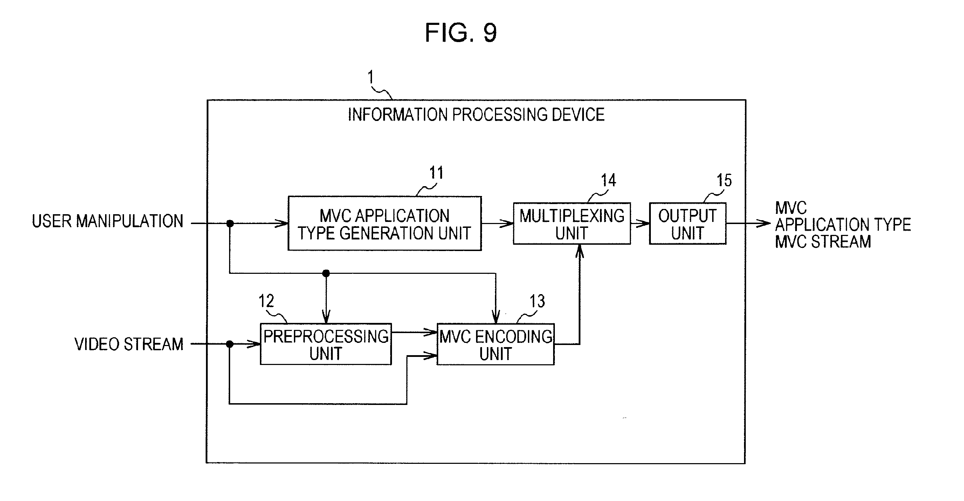

Fig. 9 is a block diagram illustrating a configuration example of an information processing apparatus 1.

As illustrated in Fig. 9, the information processing apparatus 1 includes an MVC application type generation unit 11, a preprocessing unit 12, an MVC encoding unit 13, a multiplexing unit 14, and an output unit 15.

Information that indicates the application selected by a user (producer of the content) of the information processing apparatus 1 is input to the MVC application type generation unit 11, the preprocessing unit 12, and the MVC encoding unit 13.

Also, the video stream to be encoded is input to the preprocessing unit 12 and the MVC encoding unit 13. As described above, for example, in the case where the 3D video application is selected, the stream for the L image and the stream for the R image are input as the video streams to be encoded. Also, in the case where the two views application is selected, the stream for the view-1 image and the stream for the view-2 image are input as the video streams to be encoded.

In the same manner, in the case where the high frame-rate application is selected, the high frame-rate stream is input as the video stream to be encoded. In the case where the 2D video application is selected, the 2D video stream is input as the video stream to be encoded. A user of the information processing apparatus 1 selects a predetermined application and inputs the video stream according to the selected application to the information processing apparatus 1 as the subject of encoding.

The MVC application type generation unit 11 sets the value explained with reference to Fig. 4 as the MVC application type in accordance with the input by the user of the information processing apparatus 1, and outputs the set value to the multiplexing unit 14.

The preprocessing unit 12 performs the preprocessing appropriately in accordance with the selected application.

For example, in the case where the high frame-rate application is selected, the preprocessing unit 12 divides the respective frames included in the input high frame-rate stream into the odd-numbered frames and the even-numbered frames in the order of display, starting from the forefront frame. The preprocessing unit 12 outputs the stream composed of the odd-numbered frames and the stream composed of the even-numbered frames to the MVC encoding unit 13.

Also, in the case where the 2D video application is selected, the preprocessing unit 12 copies the input 2D image stream. The preprocessing unit 12 outputs the original 2D image stream and the copy to the MVC encoding unit 13.

The MVC encoding unit 13 encodes the video stream to be encoded, which is directly supplied from the outside of the information processing apparatus 1, and the video stream supplied from the preprocessing unit 12 according to the MVC standard.

For example, in the case where the 3D video application is selected, the MVC encoding unit 13 encodes the stream for the L image, which corresponds to the base view, and the stream for the R image, which corresponds to the dependent view. Also, in the case where the two views application is selected, the MVC encoding unit 13 encodes the stream for the view-1 image, which corresponds to the base view, and the stream for the view-2 image, which corresponds to the dependent view.

In the case where the high frame-rate application is selected, the MVC encoding unit 13 encodes the stream composed of the odd-numbered frames, which correspond to the base view, and the stream composed of the even-numbered frames, which correspond to the dependent view, supplied from the preprocessing unit 12. In the case where the 2D video application is selected, the MVC encoding unit 13 encodes the original 2D image stream, which corresponds to the base view, and the image of the copy, which corresponds to the dependent view, supplied from the preprocessing unit 12.

The MVC encoding unit 13 outputs the MVC stream that includes the base view video stream obtained through the encoding and the dependent view video stream to the multiplexing unit 14.

The multiplexing unit 14 multiplexes the MVC application type supplied from the MVC application type generation unit 11 and the MVC stream supplied from the MVC encoding unit 13, and outputs TS that is obtained through the multiplexing to the output unit 15. In this example, it is assumed that the MVC application type is multiplexed to the TS together with the MVC stream.

The output unit 15 outputs the TS supplied from the multiplexing unit 14. For example, in the case where the MVC stream and the MVC application type are provided in a state where they are recorded on a recording medium, the output unit 15 records the TS, in which the MVC stream and the MVC application type are multiplexed, on the recording medium. Also, in the case where the MVC stream and the MVC application type are provided through a broadcasting wave or a network, the output unit 15 transmits the TS in which the MVC stream and the MVC application type are multiplexed to the reproduction apparatus 2.

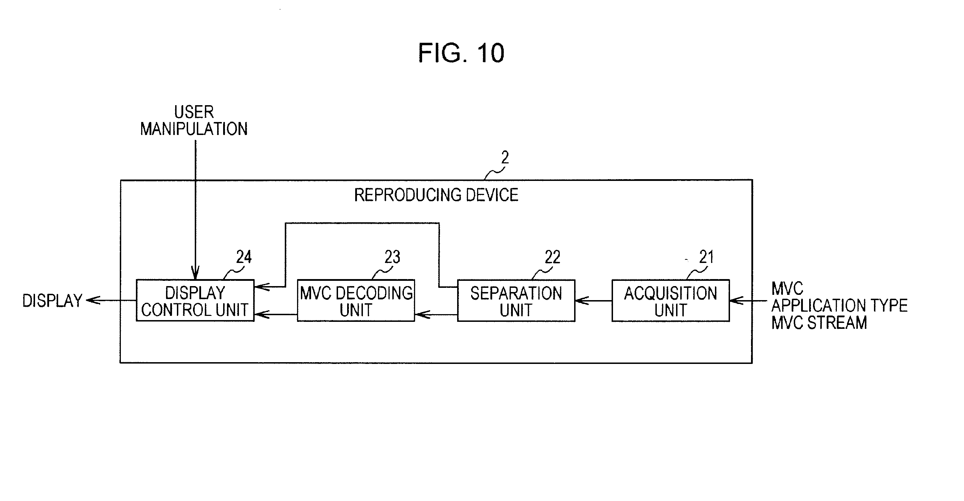

Fig. 10 is a block diagram illustrating the configuration example of the reproduction apparatus 2.

As illustrated in Fig. 10, the reproduction apparatus 2 includes an acquisition unit 21, a separation unit 22, an MVC decoding unit 23, and a display control unit 24.

The acquisition unit 21 acquires the TS provided from the information processing apparatus 1. For example, the acquisition unit 21 acquires the TS by reading the TS from the recording medium mounted on the reproduction apparatus 2. Also, the output unit 15 acquires the TS by receiving the data transmitted from the information processing unit 1. The acquisition unit 21 outputs the acquired TS to the separation unit 22.

The separation unit 22 extracts the MVC stream and the MVC application type from the TS supplied from the acquisition unit 21. The separation unit 22 outputs the extracted MVC stream to the MVC decoding unit 23, and outputs the MVC application type to the display control unit 24.

The MVC decoding unit 23 decodes the base view video stream and the dependent view video stream included in the MVC stream supplied from the separation unit 22. The MVC decoding unit 23 outputs an image obtained by decoding the base view video stream and an image obtained by decoding the dependent view video stream to the display control unit 24.

The display control unit 24 switches the display type according to the MVC application type supplied from the separation unit 22, and displays the image supplied from the MVC decoding unit 23 on a display.

For example, in the case where the 3D video application is selected, the display control unit 24 alternately displays the L image obtained by decoding the base view video stream and the R image obtained by decoding the dependent view video stream. Also, in the case where the two views application is selected, the display control unit 24 displays the image selected by the user between the view-1 image obtained by decoding the base view video stream and the view-2 image obtained by decoding the dependent view video stream.

In the same manner, in the case where the high frame-rate application is selected, the display control unit 24 alternately displays the odd-numbered frame obtained by decoding the base view video stream and the even-numbered frame obtained by decoding the dependent view video stream with a frame rate that is twice the frame rate of the base view video stream and the dependent view video stream. In the case where the 2D video application is selected, the display control unit 24 alternately displays the 2D image obtained by decoding the base view video stream and the copy of the 2D image obtained by decoding the dependent view video stream.

### [Operation of respective apparatuses]

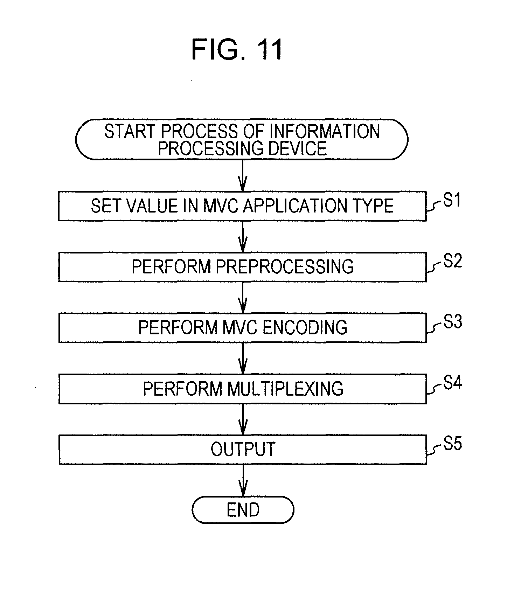

Here, with reference to the flowchart of Fig. 11, the processing of the information processing apparatus 1 will be described.

In step S1, the MVC application type generation unit 11 of the information processing apparatus 1 sets the value according to the input by the user of the information processing device 1 as the MVC application type.

In step S2, the preprocessing unit 12 appropriately performs the preprocessing according to the selected application with respect to the video streams to be encoded.

In step S3, the MVC encoding unit 13 encodes the video stream to be encoded, which is directly supplied from the outside of the information processing apparatus 1 or the video stream supplied from the preprocessing unit 12 according to the MVC standard as described above.

In step S4, the multiplexing unit 14 multiplexes the MVC application type supplied from the MVC application type generation unit 11 and the MVC stream supplied from the MVC encoding unit 13.

In step S5, the output unit 15 outputs the TS supplied from the multiplexing unit 14. Then, the processing is ended.

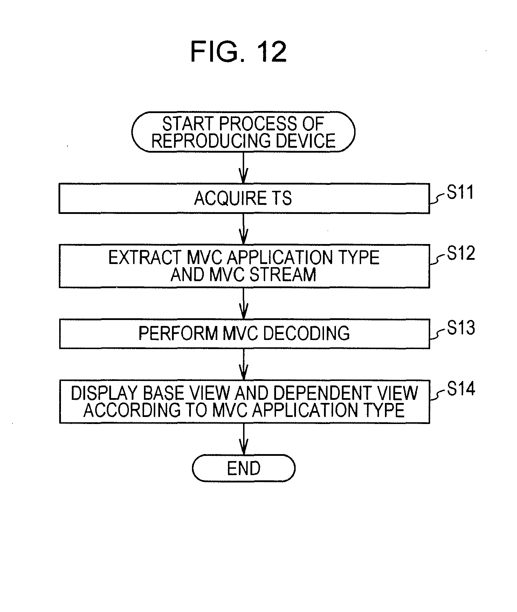

Next, with reference to the flowchart of Fig. 12, the processing of the reproduction apparatus 2 will be described.

In step S11, the acquisition unit 21 of the reproduction apparatus 2 acquires the TS provided from the information processing apparatus 1.

In step S12, the separation unit 22 extracts the MVC stream and the MVC application type from the TS acquired by the acquisition unit 21.

In step S13, the MVC decoding unit 23 decodes the base view video stream and the dependent view video stream included in the MVC stream.

In step S14, the display control unit 24 switches the display type according to the MVC application type, and displays the image supplied from the MVC decoding unit 23 on the display. Then, the processing is ended.

Through the above-described series of processes, plural functions can be realized using the base view video stream and the dependent view video stream of the MVC standard.

In the case of realizing the plural functions in the MVC standard, it is necessary for the information processing apparatus 1 to transfer what function the base view video stream and the dependent view video stream generated by the information processing apparatus 1 itself are to realize to the reproduction apparatus 2. It becomes possible to realize the functions by defining the MVC application type.

Also, since it is not necessary to install the decoder (MVC decoding unit) for realizing the plural functions in the reproduction apparatus 2, the configuration of the reproduction apparatus 2 can be simplified.

### [Configuration example of a computer]

The series of processing as described above may be executed by hardware and may be executed by software. In the case of executing the series of processing using software, a program included in the software is installed from a program recording medium to a computer provided in dedicated hardware or, for example, in a general-purpose personal computer.

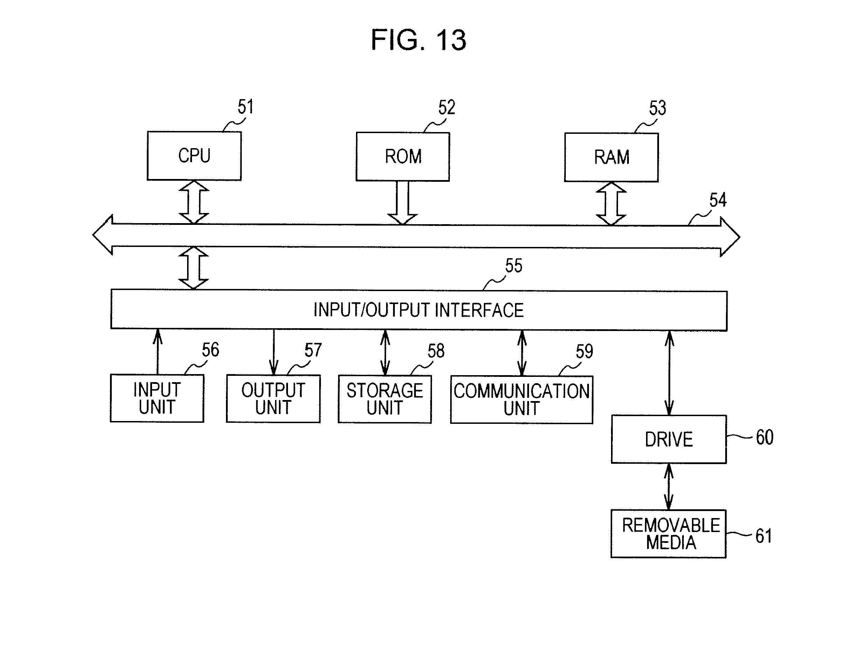

Fig. 13 is a block diagram illustrating a configuration example of computer hardware that executes the above-described series of processing by the program.

A CPU (Central Processing Unit) 51, a ROM (Read Only Memory) 52, and a RAM (Random Access Memory) 53 are connected to one another through a bus 54.

To this bus 54, an input/output interface 55 is also connected. To the input/output interface 55, an input unit 56 composed of a keyboard, a mouse, or the like, and an output unit 57 composed of a display, a speaker, or the like, are connected. Also, to the input/output interface 55, a storage unit 58 composed of a hard disk, a nonvolatile memory, or the like, a communication unit 59 composed of a network interface or the like, and a drive 60 driving a removable media 61 are connected.

In the computer configured as described above, the CPU 51 performs the above-described series of processing, for example, by loading a program stored in the storage unit 58 to the RAM 53 through the input/output interface 55 and the bus 54 and executing the loaded program.

The program executed by the CPU 51 is recorded, for example, in the removable media 61, or provided through a wired or wireless transmission medium called a LAN, the Internet, or digital broadcasting to be installed in the storage unit 58.

In this case, the program executed by the computer may be a program for processing in a time-series manner according to the order as described above or a program for processing at an appropriate timing, such as in parallel or when a call is performed.

The present application contains subject matter related to that disclosed in Japanese Priority Patent Application JP 2010-080520 filed in the Japan Patent Office on March 31, 2010, the entire contents of which are hereby incorporated by reference.

It should be understood by those skilled in the art that various modifications, combinations, sub-combinations and alterations may occur depending on design requirements and other factors insofar as they are within the scope of the appended claims or the equivalents thereof.

## Claims

1. An information processing apparatus, comprising:
an interface configured to receive a multi-view video coded stream including a base view video stream and a dependent view video stream, and control information corresponding to at least one of a plurality of predetermined formats of the multi-view coded video stream; and
a display control unit configured to control reproduction of the base video stream and the dependent video stream based on the control information.

2. The information processing apparatus of claim 1, wherein the control information indicates an application type corresponding to the multi-view video coded stream.

3. The information processing apparatus of claim 1 or 2, wherein the control information indicates that the multi-view video coded stream is a two-dimensional video signal, three-dimensional video signal and/or that the multi-view video stream is a two view video signal.

4. The information processing apparatus of claims 1 to 3, wherein the base view video stream corresponds to a left eye image and the dependent view video stream corresponds to a right eye image of a three-dimensional video signal.

5. The information processing apparatus of claims 1 to 4, wherein the base view video stream corresponds to a first view and the dependent view video stream corresponds to a second view of a two view video signal.

6. The information processing apparatus of claims 1 to 5, wherein the control information indicates that the multi-view video coded stream is a high frame rate video signal.

7. The information processing apparatus of claim 1, wherein the base view video stream corresponds to an odd numbered frame and the dependent view video stream corresponds to an even numbered frame of a high frame rate video signal.

8. The information processing apparatus of claims 1 to 7, wherein respective frames of each of the base view video stream and the dependent view video stream correspond to the same image data of a two-dimensional video signal.

9. An information processing method performed by an information processing apparatus, the method comprising:
acquiring, at an interface of the information processing apparatus, a multi-view video coded stream including a base view video stream and a dependent view video stream, and control information corresponding to at least one of a plurality of predetermined formats of the multi-view coded video stream; and
controlling, at a display control unit of the information processing apparatus, reproduction of the base video stream and the dependent video stream based on the control information.

10. A non-transitory computer-readable medium including computer program code, which when executed by an information processing apparatus, causes the information processing apparatus to perform a method comprising:
acquiring a multi-view video coded stream including a base view video stream and a dependent view video stream, and control information corresponding to at least one of a plurality of predetermined formats of the multi-view coded video stream; and
controlling reproduction of the base video stream and the dependent video stream based on the control information.

11. An information processing apparatus comprising:
an interface configured to receive video stream data;
an encoding unit configured to encode the received video stream data into a multi-view video coded stream including a base view video stream and a dependent view video stream based on predetermined format information; and
an output unit configured to output the multi-view video coded stream and associated control information corresponding to the format information.

12. The information processing apparatus of claim 11, further comprising:
a multiplexing unit configured to multiplex the multi-view video coded stream and the control information.

13. The information processing apparatus of claim 11 or 12, wherein the predetermined format information and the control information indicate an application type corresponding to the multi-view video coded stream.

14. The information processing apparatus of claims 11 to 13, wherein the predetermined format information indicates a two-dimensional video signal, a three-dimensional format and/or a two-view video signal.

15. The information processing apparatus of claim 13, wherein the encoding unit is configured to encode the video stream data into a three-dimensional multi-view video coded stream including the base view video stream corresponding to a left eye image and the dependent view video stream corresponding to a right eye image.

16. The information processing apparatus of claims 11 to 15, wherein the encoding unit is configured to encode the received video stream data into a two view multi-view video coded stream including the base view video stream corresponding to a first view and the dependent view video stream corresponding to a second view.

17. The information processing apparatus of claims 11 to 16, wherein the predetermined format information indicates a high frame rate video signal.

18. The information processing apparatus of claim 11, wherein the encoding unit is configured to encode the received video stream data into a high frame rate multi-view video coded stream including the base view video stream corresponding to odd numbered frames and the dependent view video stream corresponding to a second view.

19. The information processing apparatus of claims 11 to 18, wherein the encoding unit is configured to encode the received video stream data into a two-dimensional multi-view video coded stream and respective frames of each of the base view video stream and the dependent view video stream correspond to the same image data.

20. An information processing method performed by an information processing apparatus, the method comprising:
receiving, at an interface of the information processing apparatus, video stream data;
encoding, at an encoding unit of the information processing apparatus, the received video stream data into a multi-view video coded stream including a base view video stream and a dependent view video stream based on predetermined format information; and
outputting, at an output unit of the information processing apparatus, the multi-view video coded stream and associated control information corresponding to the format information.

21. A non-transitory computer-readable medium including computer program code, which when executed by an information processing apparatus, causes the information processing apparatus to perform a method comprising:
receiving video stream data;
encoding the received video stream data into a multi-view video coded stream including a base view video stream and a dependent view video stream based on predetermined format information; and
outputting the multiplexed multi-view video coded stream and associated control information corresponding to the format information.
